# EUROPEAN PATENT APPLICATION

(11) **EP 4 152 487 A1**
(43) Date of publication of application: **22.03.2023**
(21) Application number: 20935516.3
(22) Date of filing: 15.05.2020
(51) Int. Cl.: H01M 50/105

(54) **PACKAGING FILM, ELECTROCHEMICAL APPARATUS, AND ELECTRONIC APPARATUS**

(71) Applicant: Ningde Amperex Technology Ltd., Ningde City, Fujian Province 352100 (CN)
(72) Inventor: CHEN, Congrong, Ningde City, Fujian Province, 352100 (CN); CHEN, Zhihuan, Ningde City, Fujian Province, 352100 (CN); CUI, Hang, Ningde City, Fujian Province, 352100 (CN); XIE, Yuansen, Ningde City, Fujian Province, 352100 (CN)
(74) Representative: Icosa
(86) International application number: PCT/CN2020/090668
(87) International publication number: WO 2021/227073

(57) **Abstract**

A packaging film (100) is provided, including a protective layer (20), a first bonding layer (30), a metal layer (40), a second bonding layer (50), and a sealing layer (60) that are sequentially stacked. The protective layer (20) includes a polymer resin layer (21) and a carbon material (22). An electrochemical apparatus (200) and an electronic apparatus (300) are also provided.

## Description

### TECHNICAL FIELD

This application relates to the battery field, and in particular, to a packaging film, an electrochemical apparatus, and an electronic apparatus.

### BACKGROUND

Silicon has a promising application prospect in lithium-ion batteries for its high theoretical lithiation gram capacity of 4200 mAh/g and abundant reserves on the earth. However, large volume swelling of silicon particles occurs during cycling, which leads to pulverization of silicon particles, and reduces the adhesion between the active material layer and current collector in the negative electrode plate, resulting in detachment of the active material layer, thus degrading cycling performance of the lithium-ion battery.

Especially for pouch batteries, packaging films cannot inhibit the swelling of silicon particles. When silicon particles swell, not only the cycling performance of the batteries is affected, but also the sealing edges of the packaging films are easily broken, resulting in the risk of electrolyte leakage.

### SUMMARY

In order to overcome the preceding shortcomings in the prior art, it is necessary to provide a packaging film that can inhibit the swelling of silicon particles.

In addition, it is also necessary to provide an electrochemical apparatus including the foregoing packaging film.

Moreover, it is also necessary to provide an electronic apparatus including the foregoing electrochemical apparatus.

This application provides a packaging film, including a protective layer, a first bonding layer, a metal layer, a second bonding layer, and a sealing layer that are sequentially stacked.

In this application, a carbon material acting as skeleton in the packaging film is added into the packaging film, which can enhance the kinetic performance of the packaging film and is conducive to reducing thickness of the entire packaging film. When such packaging film is applied to an electrochemical apparatus, the energy density of the electrochemical apparatus can be increased, and because of the enhanced kinetic performance of the packaging film, the volume swelling of an electrode assembly in the electrochemical apparatus can be inhibited, and the deformation of the electrode assembly can be alleviated.

In some embodiments of this application, the polymer resin layer and the carbon material satisfy at least one of the following relationships: the carbon material is located in the polymer resin layer or in at least one surface of the polymer resin layer.

In some embodiments of this application, a mass percentage of the carbon material in the protective layer is 5% to 50%. When the mass percentage of the carbon material in the protective layer is too high, the protective layer cannot prevent air penetration effectively. When the mass percentage of the carbon material in the protective layer is too low, effects of enhancing the kinetic performance of the packaging film and inhibiting the volume swelling of the electrode assembly may not be achieved.

In some embodiments of this application, the carbon material includes at least one of carbon nanotubes and carbon fibers. The carbon nanotubes and the carbon fibers have relatively high tensile strength, elastic modulus, oxidation resistance, and wear resistance and low thermal expansion coefficient, which is conducive to further enhancing the kinetic performance of the packaging film.

In some embodiments of this application, the carbon material includes the carbon fibers, where the carbon fibers are interconnected and woven to form a carbon layer, and the carbon layer is located between the polymer resin layer and the first bonding layer. A structure of the carbon layer obtained through interconnection and weaving of the carbon fibers is relatively compact, and compared with the structure of filling carbon fibers in the polymer resin layer, such carbon layer can prevent the piercing by sharp objects more effectively, so as to further increase the puncturing resistance of the packaging film.

In some embodiments of this application, thickness of the carbon layer is 2 µm to 5 µm.

In some embodiments of this application, the carbon nanotubes include at least one of multi-walled carbon nanotubes and single-walled carbon nanotubes.

In some embodiments of this application, thickness of the protective layer is 7 µm to 16 µm.

In some embodiments of this application, the polymer resin includes at least one of nylon or polyethylene terephthalate.

In some embodiments of this application, the packaging film further includes a matte layer, the protective layer is located between the matte layer and the first bonding layer, and thickness of the matte layer is 2 µm to 5 µm.

In some embodiments of this application, thickness of the metal layer is 24 µm to 35 µm, and thickness of the sealing layer is 24 µm to 35 µm.

In some embodiments of this application, the sealing layer includes polypropylene.

This application further provides an electrochemical apparatus, including an electrode assembly. The electrochemical apparatus further includes the foregoing packaging film, and the packaging film is configured to package the electrode assembly. The packaging film used, the energy density of the electrochemical apparatus can be increased, and because of the enhanced kinetic performance of the packaging film, the volume swelling of the electrode assembly in the electrochemical apparatus can be inhibited, and the deformation of the electrode assembly can be alleviated. In addition, the carbon material has a high heat conductivity coefficient, and therefore the heat inside the electrochemical apparatus can be conducted so as to improve safety.

In some embodiments of this application, the electrode assembly includes a positive electrode plate, a separator, and a negative electrode plate, where the separator is located between the positive electrode plate and the negative electrode plate, the positive electrode plate, the separator, and the negative electrode plate are made into the electrode assembly through lamination or winding, and the negative electrode plate includes a silicon-based material.

In some embodiments of this application, the silicon-based material includes at least one of silicon, silicon monoxide, a silicon-carbon composite material, or a composite material of silicon monoxide and carbon.

This application further provides an electronic apparatus, including the foregoing electrochemical apparatus.

### BRIEF DESCRIPTION OF DRAWINGS

FIG. 1 is a schematic cross-sectional view of a packaging film according to an embodiment of this application.
FIG. 2 is a schematic cross-sectional view of a packaging film according to another embodiment of this application.
FIG. 3 is a top view of a carbon layer of the packaging film shown in FIG. 2.
FIG. 4 is a schematic structural diagram of an electrochemical apparatus according to an embodiment of this application.
FIG. 5 is a schematic structural diagram of an electronic apparatus according to an embodiment of this application.

### Reference signs of main components

| | |
|---|---|
| Matte layer | 10 |
| Protective layer | 20 |
| Polymer resin layer | 21 |
| Carbon material | 22 |
| First bonding layer | 30 |
| Metal layer | 40 |
| Second bonding layer | 50 |
| Sealing layer | 60 |
| Packaging film | 100 |
| Electrochemical apparatus | 200 |
| Electrode assembly | 201 |
| Carbon layer | 220 |
| Electronic apparatus | 300 |
| Separator | 2011 |
| Negative electrode plate | 2012 |
| Positive electrode plate | 2013 |

This application will be further described with reference to the accompanying drawings in the following embodiments.

### DESCRIPTION OF EMBODIMENTS

In order to help understand the foregoing objectives, features, and advantages of this application more clearly, the following describes this application in detail with reference to the accompanying drawings and embodiments. It should be noted that, without conflict, the embodiments and features in the embodiments of this application may be combined with each other. Many specific details are illustrated in the following descriptions to facilitate a full understanding of this application, and the embodiments described are only some rather than all of the embodiments of this application. All other embodiments obtained by a person of ordinary skill in the art based on the embodiments of this application without creative efforts shall fall within the protection scope of this application.

Unless otherwise defined, all technical and scientific terms used herein shall have the same meanings as commonly understood by those skilled in the art to which this application relates. The terms used in this specification of this application are intended to merely describe embodiments rather than to limit this application. The terms "and/or" used herein include all and arbitrary combinations of one or more related listed items.

In the embodiments of this application, in order to facilitate describing not limiting this application, the term "connect" as used in the specification and claims of this application is not limited to a physical or mechanical connection, whether direct or indirect. "Upper", "lower", "above", "below", "left", and "right" are only used to represent the relative position relationship. When the absolute position of the described object changes, the relative position relationship also changes accordingly.

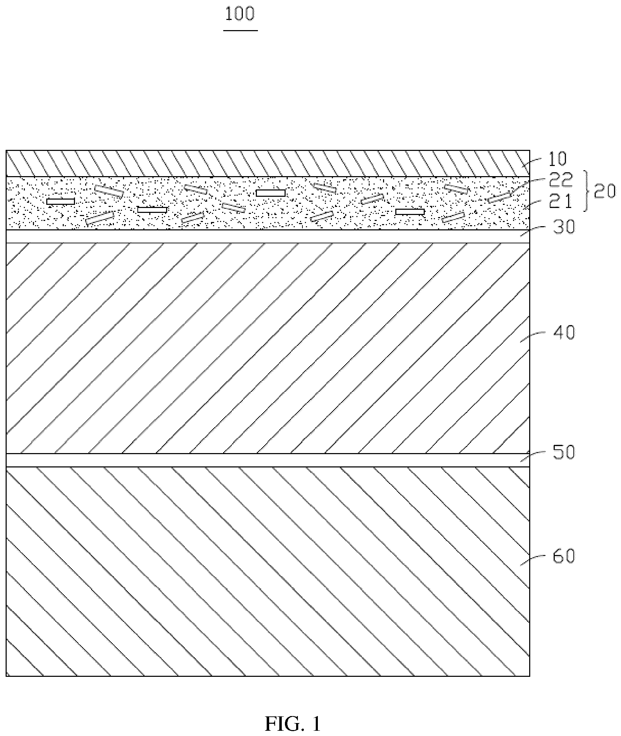

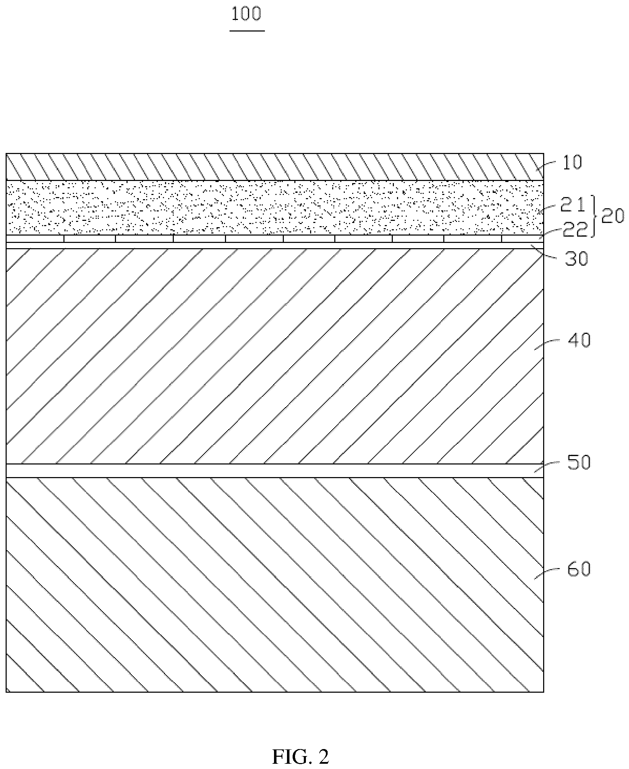

Referring to FIG 1 and FIG. 2, an embodiment of this application provides a packaging film 100, including a protective layer 20, a first bonding layer 30, a metal layer 40, a second bonding layer 50, and a sealing layer 60 that are sequentially stacked. The protective layer 20 includes a polymer resin layer 21 and a carbon material 22.

The polymer resin layer 21 is configured to protect the metal layer 40 in the packaging film 100, to prevent the metal layer 40 from damage caused by an external force and to prevent the air penetration of the external environment, so as to maintain the electrochemical apparatus in a water and oxygen free environment. The metal layer 40 is configured to prevent moisture penetration from the external environment and to prevent the electrochemical apparatus from damage caused by an external force. In an embodiment, the metal layer 40 may be specifically an aluminum foil layer. The sealing layer 60 is configured to package the packaging film 100 to prevent the packaging film 100 from being dissolved or swollen by an organic solvent inside the electrochemical apparatus. The sealing layer 60 is further configured to prevent the electrolyte inside the electrochemical apparatus from being in contact with the metal layer 40, resulting in corrosion of the metal layer 40. The first bonding layer 30 is configured to bond the protective layer 20 and the metal layer 40, and the second bonding layer 50 is configured to bond the metal layer 40 and the sealing layer 60, so as to prevent two adjacent layers from detachment.

The polymer resin layer 21 and the carbon material 22 satisfy at least one of the following relationships: the carbon material 22 is located in the polymer resin layer 21 (refer to FIG. 1) or in at least one surface of the polymer resin layer 21 (refer to FIG. 2). The carbon material 22 being located on at least one surface of the polymer resin layer 21 may be that the carbon material 22 is located between the polymer resin layer 21 and the first bonding layer 30, or located on a surface of the polymer resin layer 21 away from the first bonding layer 30, or located both between the polymer resin layer 21 and the first bonding layer 30 and on a surface of the polymer resin layer 21 away from the first bonding layer 30. Further, the carbon material 22 may be located on an entire surface of the polymer resin layer 21, or only on a partial surface of the polymer resin layer 21.

As shown in FIG. 2, the carbon material 22 is located between the polymer resin layer 21 and the first bonding layer 30. Moreover, the carbon material 22 is made into a carbon layer 220 of a mesh structure through interconnection and weaving.

In this application, the carbon material 22 acting as skeleton in the packaging film 100 is added into the packaging film 100, which can enhance the kinetic performance (for example, tensile strength and puncturing resistance) of the packaging film 100 and is conducive to reducing thickness of the entire packaging film 100. When the foregoing packaging film 100 is applied to the electrochemical apparatus, the energy density of the electrochemical apparatus can be increased, and because of the enhanced kinetic performance of the packaging film 100, the volume swelling of an electrode assembly in the electrochemical apparatus can be inhibited, and the deformation of the electrode assembly can be alleviated. In addition, the carbon material has a high heat conductivity coefficient, and therefore the heat inside the electrochemical apparatus can be conducted so as to improve safety.

In some embodiments, the carbon material 22 includes at least one of carbon nanotubes and carbon fibers. The carbon nanotubes and the carbon fibers have relatively high tensile strength, elastic modulus, oxidation resistance, and wear resistance and low thermal expansion coefficient, which is conducive to further enhancing the kinetic performance of the packaging film 100.

In some embodiments, a mass percentage of the carbon material 22 in the protective layer 20 is 5% to 50%. When the mass percentage of the carbon material 22 in the protective layer 20 is too high, a percentage of resin in the polymer resin layer 21 is relatively low, and therefore the protective layer 20 cannot prevent air penetration effectively. When the mass percentage of the carbon material 22 in the protective layer 20 is too low, effects of enhancing the kinetic performance of the packaging film 100 and inhibiting the volume swelling of the electrode assembly may not be achieved.

As shown in FIG. 1, in an embodiment, the carbon material 22 is carbon nanotubes, and the carbon nanotubes are filled in the polymer resin layer 21. In this way, the kinetic performance of the protective layer 20 may be increased, and therefore, with the packaging film 100 used, the volume swelling of the electrode assembly can be inhibited and the deformation of the electrode assembly can be alleviated. Certainly, in other embodiments, the carbon material 22 in the polymer resin layer 21 may alternatively be carbon fibers.

Further, thickness of the protective layer 20 is 7 µm to 16 µm. When the protective layer 20 is too thin, the air penetration cannot be prevented effectively; and when the protective layer 20 is too thick, the energy density of the electrochemical apparatus may be decreased.

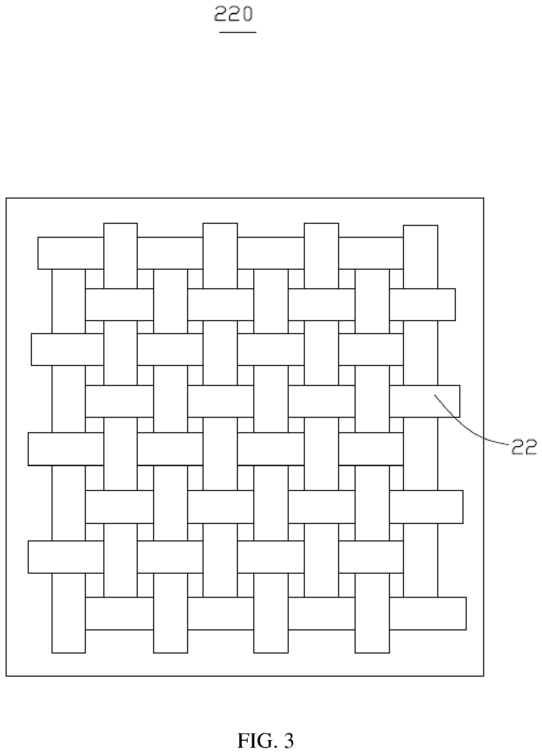

As shown in FIG. 2 and FIG. 3, in another embodiment, the carbon material 22 is carbon nanotubes. The carbon nanotubes are made into carbon fibers through interconnection in a pile diameter direction, and then the carbon fibers interconnected and woven to form the carbon layer 220. A structure of the carbon layer 220 obtained through interconnection and weaving of the carbon fibers made from the carbon nanotubes 22 is more compact, and compared with the structure of filling the carbon nanotubes 22 in the polymer resin layer 21, the carbon layer 220 can prevent the piercing by sharp objects more effectively, so as to further increase the puncturing resistance of the packaging film 100. In some embodiments, the carbon nanotubes include at least one of multi-walled carbon nanotubes and single-walled carbon nanotubes.

Further, thickness of the carbon layer 220 is 2 µm to 5 µm and thickness of the polymer resin layer 21 is 7 µm to 13 µm, meaning thickness of the entire protective layer 20 is 9 µm to 18 µm.

In another embodiment, the carbon material 22 may further be carbon fibers, where the carbon fibers are interconnected and woven to form the carbon layer 220. A structure of the carbon layer 220 obtained through interconnection and weaving of the carbon fibers is more compact, and compared with the structure of filling the carbon nanotubes 22 in the polymer resin layer 21, such carbon layer 220 can prevent the piercing by sharp objects more effectively, so as to further increase the puncturing resistance of the packaging film 100.

In some embodiments, a material of the polymer resin layer 21 includes at least one of nylon or polyethylene terephthalate. The sealing layer 60 includes polypropylene. Further, the sealing layer 60 may be a polypropylene casting film, that is, a polypropylene film produced by casting process. A bonding material used for the first bonding layer 30 and the second bonding layer 50 includes at least one of acrylic resin, epoxy resin, or polyurethane.

In some embodiments, the packaging film 100 further includes a matte layer 10, the protective layer 20 is located between the matte layer 10 and the first bonding layer 30, and thickness of the matte layer 10 is 2 µm to 5 µm.

Moreover, thickness of the metal layer 40 is 24 µm to 35 µm. When the metal layer 40 is too thin, the strength thereof is insufficient. When the metal layer 40 is too thick, an overall weight of the electrochemical apparatus may be increased.

Thickness of the sealing layer 60 is 24 µm to 35 µm. When the sealing layer 60 is too thin, the metal layer 40 cannot be protected effectively. When the sealing layer 60 is too thick, the heat dissipation effect and the punching effect of the packaging film 100 may be affected.

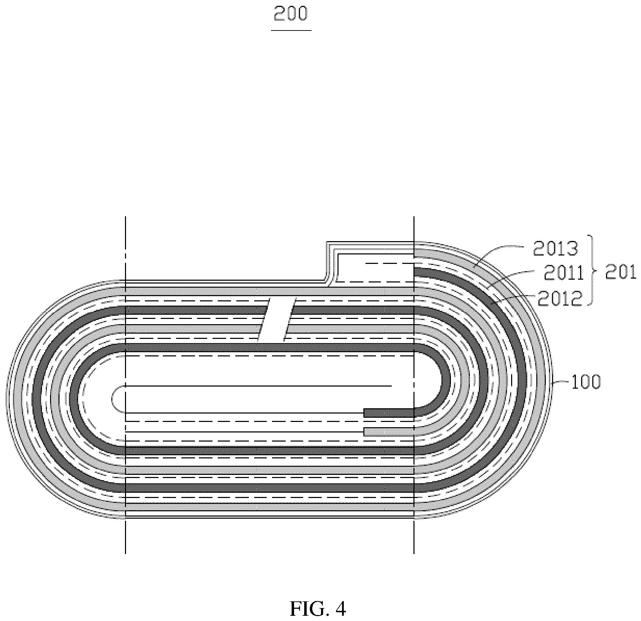

Referring to FIG. 4, an embodiment of this application further provides an electrochemical apparatus 200. The electrochemical apparatus 200 includes an electrode assembly 201 and a packaging film 100. The packaging film 100 is configured to package the electrode assembly 201. The electrochemical apparatus 200 in this application includes all apparatuses capable of generating electrochemical reactions. Specifically, the electrochemical apparatus 200 includes all types of primary batteries, secondary batteries, fuel batteries, solar batteries, and capacitors (for example, super capacitors). Optionally, the electrochemical apparatus 200 may be a lithium secondary battery, including a lithium metal secondary battery, a lithium-ion secondary battery, a lithium polymer secondary battery, and a lithium-ion polymer secondary battery.

In an embodiment, the electrode assembly 201 includes a positive electrode plate 2013, a separator 2011, and a negative electrode plate 2012. The separator 2011 is located between the positive electrode plate 2013 and the negative electrode plate 2012. The positive electrode plate 2013, the separator 2011, and the negative electrode plate 2012 are made into the electrode assembly 201 through lamination or winding. The negative electrode plate 2012 includes a silicon-based material.

Further, the silicon-based material may include at least one of silicon, silicon monoxide, a silicon-carbon composite material, or a composite material of silicon monoxide and carbon.

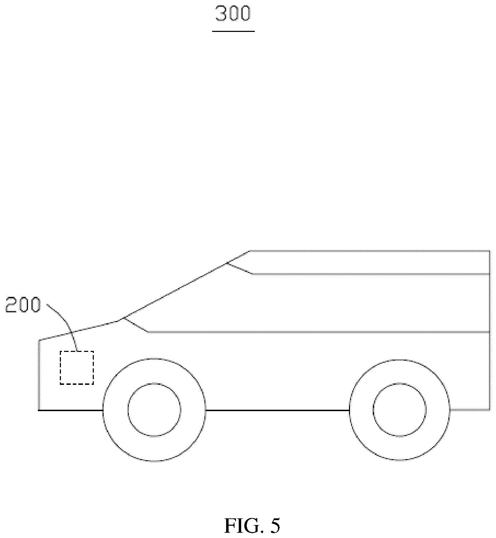

Referring to FIG. 5, an embodiment of this application further provides an electronic apparatus 300. The electronic apparatus 300 includes an electrochemical apparatus 200. The electronic apparatus 300 may be a consumer electronics product (for example, a mobile communication apparatus, a tablet computer, and a notebook), an electric tool, a drone, an energy storage device, a power device, or the like. Referring to FIG. 5, in an embodiment, the electronic apparatus 300 is an electric vehicle.

This application is described in the following by using specific examples and comparative examples.

### Example 1

Preparation of negative electrode plate: A negative active material including silicon-based material and graphite, conductive carbon black, and styrene butadiene rubber (SBR) were mixed at a mass ratio of 95:1.2:1.0:3.8 and dissolved in deionized water, the resulting mixture was stirred under vacuum condition until the system was uniform, and a negative slurry was obtained. The copper foil was used as a negative current collector. The negative slurry was applied onto two surfaces of the negative current collector, the resulting product was dried at 80°C-90°C, subject to cold pressing, edge shearing, part cutting, and strip shearing and then dried in vacuum for 4 h at 110°C, and a negative electrode plate was obtained. A mass percentage of the silicon-based material in the negative electrode plate was 15%.

Preparation of positive electrode plate: A positive active material lithium cobaltate (LiCoO₂), conductive carbon black, and polyvinylidene difluoride (PVDF) was mixed at a mass ratio of 96.7:1.7:1.6 and dissolved in an N-methylpyrrolidone (NMP) solvent, the resulting mixture was stirred under vacuum condition until the system was uniform, and a positive slurry was obtained. The aluminum foil was used as a positive current collector. The positive slurry was applied onto the positive current collector, the resulting product was dried at 85°C, subject to cold pressing, edge shearing, part cutting, and strip shearing, and then dried in vacuum for 4 h at 85°C, and a positive electrode plate was obtained.

Preparation of packaging film: The carbon nanotubes were added to the polymer resin to obtain a protective layer. The matte layer, the protective layer, the first bonding layer, the aluminum foil layer, the second bonding layer, and the sealing layer were sequentially stacked to obtain a packaging film. A mass percentage of the carbon nanotubes in the protective layer was 10%. Thickness of the protective layer was 12 µm, and thickness of the entire packaging film was 67 µm.

Preparation of lithium-ion pouch battery: A polyethylene film was used as a separator and placed between the positive electrode plate and the negative electrode plate, and then the stack was made into an electrode assembly through winding. The electrode assembly was loaded into the packaging film and baked in vacuum at 75°C for 10 h, injected with the electrolyte and then packaged in vacuum. The packaged electrode assembly was left standing for 24 h before activation processing. In the activation processing, the battery was charged to 4.2 V at a constant current of 0.1C, then charged to 4.2 V at a constant voltage of 0.05C, and then discharged to 3.0 V at a constant current of 0.1C. The charge and discharge cycle was repeated twice. Finally, the battery was charged at a constant current of 0.1C until the charging voltage reached 3.8 V. A pouch battery was obtained.

### Example 2

The negative electrode plate, the positive electrode plate, and the lithium-ion pouch battery in Example 2 were prepared in the same steps as those of Example 1, and details are not repeated herein.

The preparation of the packaging film differs from that in Example 1 in that the mass percentage of the carbon nanotubes in the protective layer was 20%.

### Example 3

The negative electrode plate, the positive electrode plate, and the lithium-ion pouch battery in Example 3 were prepared in the same steps as those of Example 1, and details are not repeated herein.

The preparation of the packaging film differs from that in Example 1 in that the mass percentage of the carbon nanotubes in the protective layer was 30%.

### Example 4

The negative electrode plate, the positive electrode plate, and the lithium-ion pouch battery in Example 4 were prepared in the same steps as those of Example 1, and details are not repeated herein.

The preparation of the packaging film differs from that in Example 1 in that the mass percentage of the carbon nanotubes in the protective layer was 40%.

### Example 5

The negative electrode plate, the positive electrode plate, and the lithium-ion pouch battery in Example 5 were prepared in the same steps as those of Example 1, and details are not repeated herein.

The preparation of the packaging film differs from that in Example 1 in that the mass percentage of the carbon nanotubes in the protective layer was 50%.

### Example 6

The negative electrode plate, the positive electrode plate, and the lithium-ion pouch battery in Example 6 were prepared in the same steps as those of Example 1, and details are not repeated herein.

Preparation of packaging film: The carbon nanotubes were interconnected in a pile diameter direction to form carbon fibers, and the carbon fibers were interconnected and woven to form a carbon layer. The matte layer, the polymer resin layer, the carbon layer, the first bonding layer, the aluminum foil layer, the second bonding layer, and the sealing layer were sequentially stacked to obtain a packaging film. A mass percentage of the carbon nanotubes in the protective layer (the protective layer included a polymer resin layer and a carbon mesh layer) was 30%, thickness of the carbon layer was 3 µm, and thickness of the polymer resin layer was 9 µm.

### Example 7

The negative electrode plate, the positive electrode plate, and the lithium-ion pouch battery in Example 7 were prepared in the same steps as those of Example 6, and details are not repeated herein.

The preparation of the packaging film differs from that in Example 6 in that the mass percentage of the carbon nanotubes in the protective layer was 50%, thickness of the carbon layer was 5 µm, and thickness of the polymer resin layer was 7 µm.

### Example 8

The negative electrode plate, the positive electrode plate, and the lithium-ion pouch battery in Example 8 were prepared in the same steps as those of Example 1, and details are not repeated herein.

The preparation of the packaging film differs from that in Example 1 in that the mass percentage of the carbon nanotubes in the protective layer was 30%, thickness of the protective layer was 10 µm, and thickness of the entire packaging film was 65 µm.

### Example 9

The positive electrode plate and the lithium-ion pouch battery in Example 9 were prepared in the same steps as those of Example 8, and details are not repeated herein.

The preparation of the negative electrode plate differs from that in Example 8 in that the mass percentage of the silicon-based material in the negative electrode plate was 20%.

The preparation of the packaging film differs from that in Example 8 in that the mass percentage of the carbon nanotubes in the protective layer was 10%, thickness of the protective layer was 10 µm, and thickness of the entire packaging film was 67 µm.

### Example 10

The positive electrode plate and the lithium-ion pouch battery in Example 10 were prepared in the same steps as those of Example 8, and details are not repeated herein.

The preparation of the negative electrode plate differs from that in Example 8 in that the mass percentage of the silicon-based material in the negative electrode plate was 25%.

The preparation of the packaging film differs from that in Example 8 in that a mass percentage of the carbon nanotubes in the protective layer was 16%, thickness of the protective layer was 10 µm, and thickness of the entire packaging film was 67 µm.

### Example 11

The positive electrode plate and the lithium-ion pouch battery in Example 11 were prepared in the same steps as those of Example 8, and details are not repeated herein.

The preparation of the negative electrode plate differs from that in Example 8 in that the mass percentage of the silicon-based material in the negative electrode plate was 25%.

Preparation of packaging film: The carbon nanotubes were interconnected in a pile diameter direction to form carbon fibers, and then the carbon fibers were interconnected and woven to form a carbon layer. The matte layer, the polymer resin layer, the carbon layer, the first bonding layer, the aluminum foil layer, the second bonding layer, and the sealing layer were sequentially stacked to obtain a packaging film. A mass percentage of the carbon nanotubes in the protective layer was 16%, thickness of the carbon layer was 5 µm, thickness of the polymer resin layer was 7 µm, and thickness of the entire packaging film was 67 µm.

### Example 12

The positive electrode plate and the lithium-ion pouch battery in Example 12 were prepared in the same steps as those of Example 8, and details are not repeated herein.

The preparation of the negative electrode plate differs from that in Example 8 in that a mass percentage of the silicon-based material in the negative electrode plate was 25%.

The preparation of the packaging film differs from that in Example 8 in that the mass percentage of the carbon nanotubes in the protective layer was 27%, thickness of the protective layer was 10 µm, and thickness of the entire packaging film was 67 µm.

### Comparative Example 1

The negative electrode plate, the positive electrode plate, and the lithium-ion pouch battery in Comparative Example 1 were prepared in the same steps as those of Example 1, and details are not repeated herein.

The preparation of the packaging film differs from that in Example 1 in that the carbon nanotubes were not added to the packaging film, thickness of the protective layer was 10 µm, and thickness of the entire packaging film was 67 µm.

### Comparative Example 2

The negative electrode plate, the positive electrode plate, and the lithium-ion pouch battery in Comparative Example 2 were prepared in the same steps as those of Example 1, and details are not repeated herein.

The preparation of the packaging film differs from that in Example 1 in that the carbon nanotubes were not added to the packaging film, thickness of the protective layer was 10 µm, and thickness of the entire packaging film was 65 µm.

The packaging films prepared in Examples 1 to 12 and Comparative Examples 1 and 2 were subject to tensile strength test and puncturing resistance test, and the pouch batteries prepared in Example 1 to 12 and Comparative Examples 1 and 2 were subject to full-charge swelling rate test, and the test results were recorded in Table 1.

The tensile strength test was done using a multifunctional tensile testing machine, and the test procedure included: cutting a packaging film into samples with a length of 150 mm and width of 15 mm, mounting the sample to two fixtures of the tensile testing machine, and setting an initial tensile length to be 50 mm, and performing tensile test at a tensile speed of 5 mm/min until the sample was broken. The maximum tensile force at which the sample was broken was recorded. The ratio of the maximum tensile force to the cross-sectional area of the sample (which can be calculated by multiplying the width and thickness of the sample) was the tensile strength.

The puncturing resistance test was done using a multifunctional tensile testing machine, and the test procedure included: piercing the packaging film at a speed of 50 mm/min using a needle with a spherical radius of 0.5 mm, and reading a value of the tensile testing machine when the needle pierced the packaging film, where the value was the puncturing resistance.

The step of testing full-charge battery swelling rate included: measuring thickness of a fresh battery in 50% state of charge (50% SOC) using a spiral micrometer at 25°C; when the battery cell was in 100% state of charge (100% SOC) after 400 cycles, testing thickness of the battery at that point still using the spiral micrometer; and comparing the thickness at the point with the initial thickness of the fresh battery in 50% state of charge to obtain the swelling rate of the battery in 100% state of charge (50% SOC) at the point.

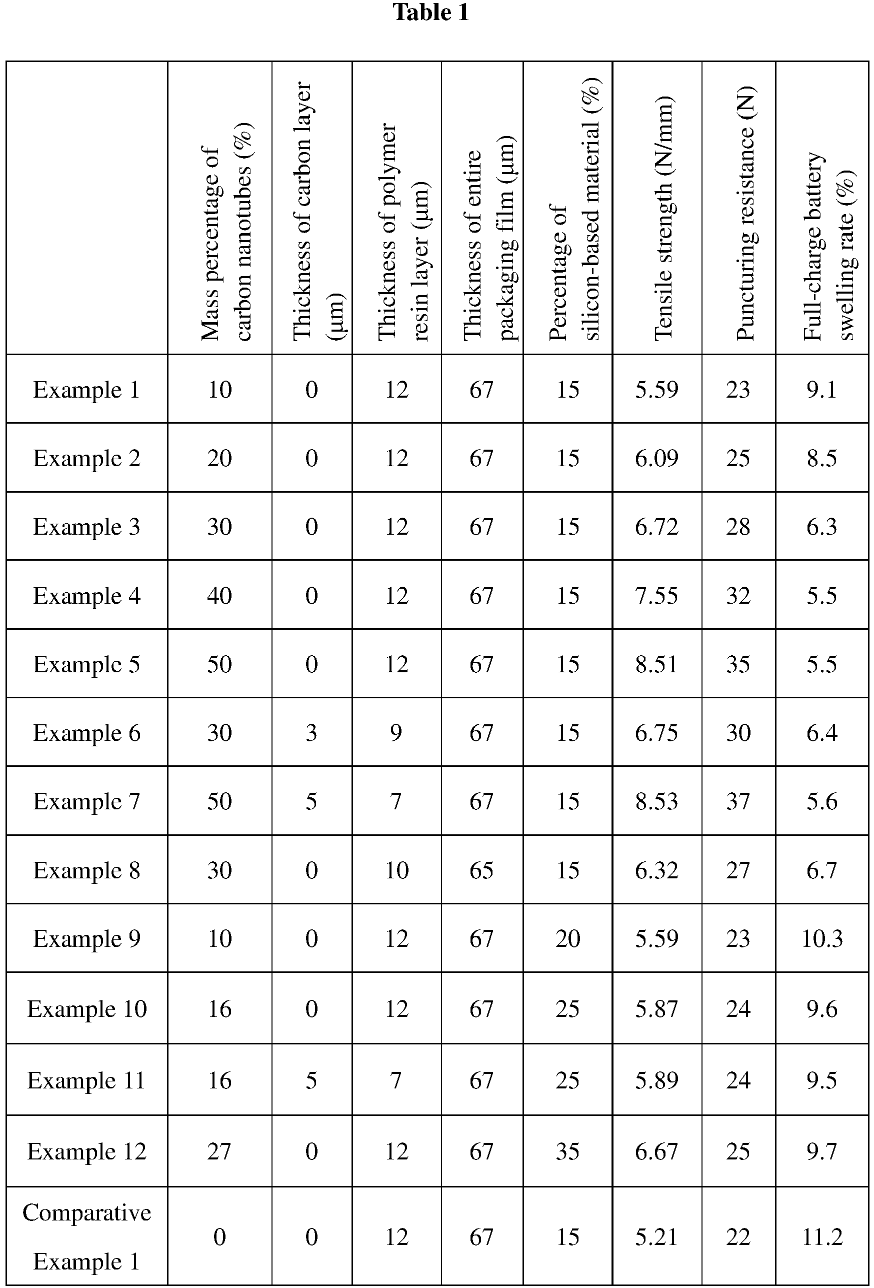

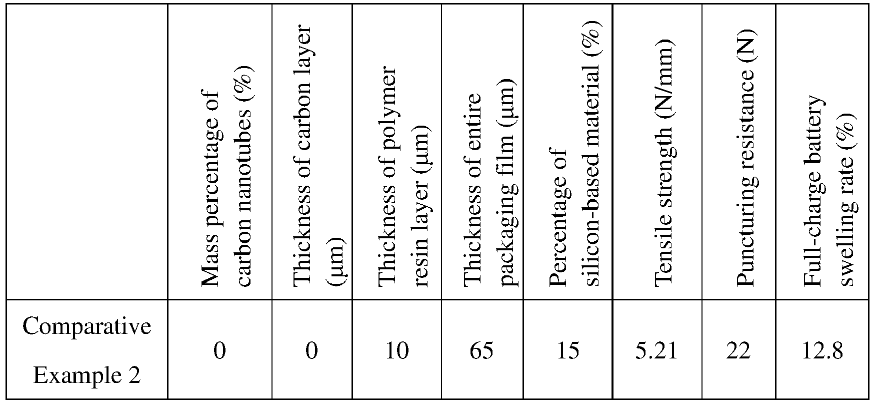

It can be learned from the test results shown in Table 1 that, as compared with the Comparative Examples 1 and 2, because the carbon nanotubes are added to the polymer resin layer in Examples 1 to 5, the volume swelling of the pouch battery is inhibited, and the full-charge swelling rate is lower. As compared with the Comparative Examples 1 and 2, because the carbon layer obtained through weaving of carbon nanotubes is added to the surface of the polymer resin layer in Example 6 and Example 7, the swelling rate of the pouch battery is relatively small. Therefore, either adding the carbon nanotubes to the polymer resin layer (hereinafter referred to as add method 1) or adding carbon layer obtained through weaving of carbon nanotubes on the surface of the polymer resin layer (hereinafter referred to as add method 2) performs well in inhibiting the swelling of the pouch battery.

In Examples 1 to 5, with the increase of the percentage of carbon nanotubes, the tensile strength and puncturing resistance of the packaging film are gradually increased, and the swelling rate of the entire pouch battery is decreased. However, when the percentage of carbon nanotubes is increased to a given extent (that is, from 40% to 50%), the swelling rate of the pouch battery is less inhibited.

The add method 1 and add method 2 are used for the carbon nanotubes in Example 3 and Example 6 respectively, and given the same percentage of carbon nanotubes, the two have roughly the same tensile strength and full-charge swelling rate. Similarly, the add method 1 and add method 2 are used for the carbon nanotubes in Example 5 and Example 7 respectively, and given the same percentage of carbon nanotubes, the two have roughly the same tensile strength and full-charge swelling rate. This, therefore, proves that different add methods do not have much effect on the tensile strength and full-charge swelling rate of the packaging film. However, as compared with Example 3, the puncturing resistance of the packaging film in Example 6 is increased. Similarly, as compared with Example 5, the puncturing resistance of the packaging film in Example 7 is also increased. This is because the carbon layer is obtained through interconnection and weaving of carbon fibers made from carbon nanotubes, and the carbon layer has a relatively compact structure, which can prevent piercing by sharp objects.

As compared with Comparative Example 1, carbon nanotubes are added to the polymer resin layer in Example 8, and therefore not only the swelling of the battery can be inhibited, but also the thickness of the entire packaging film can be decreased, which is beneficial to increasing the energy density of the battery.

As compared with Example 9, the percentage of silicon-based material in the negative electrode plate is increased in Examples 10 to 12, and therefore if the full-charge swelling rate is required to be less than 10%, the percentage of carbon nanotubes should be increased accordingly using either add method 1 (as in Example 10 and Example 12) or add method 2 (as in Example 11). The comparison between Example 10 and Example 12 shows that when the percentage of the silicon-based material in the negative electrode plate increases by the same gradient, the percentage of the carbon nanotubes in the packaging film needs to increase by a higher gradient in order to keep the full-charge swelling rate less than 10%.

The foregoing embodiments are only intended to describe rather than limit the technical solution of this application, although this application is explained in detail with reference to the foregoing preferred embodiments, person of ordinary skill in the art should understand that any modification or equivalent replacement of the technical solution in this application shall not departing from the spirit and scope of the technical solution of this application.

## Claims

1. A packaging film, comprising a protective layer, a first bonding layer, a metal layer, a second bonding layer, and a sealing layer that are sequentially stacked, **characterized in that** the protective layer comprises a polymer resin layer and a carbon material.

2. The packaging film according to claim 1, **characterized in that** the polymer resin layer and the carbon material satisfy at least one of the following relationships: the carbon material is located in the polymer resin layer or in at least one surface of the polymer resin layer.

3. The packaging film according to claim 1, **characterized in that** a mass percentage of the carbon material in the protective layer is 5% to 50%.

4. The packaging film according to claim 1, **characterized in that** the carbon material comprises at least one of carbon nanotubes and carbon fibers.

5. The packaging film according to claim 4, **characterized in that** the carbon material comprises the carbon fibers, wherein the carbon fibers are interconnected and woven to form a carbon layer, and the carbon layer is located between the polymer resin layer and the first bonding layer.

6. The packaging film according to claim 5, **characterized in that** thickness of the carbon layer is 2 µm to 5 µm.

7. The packaging film according to claim 4, **characterized in that** the carbon nanotubes comprise at least one of multi-walled carbon nanotubes and single-walled carbon nanotubes.

8. The packaging film according to claim 1, **characterized in that** thickness of the protective layer is 7 µm to 16 µm.

9. The packaging film according to claim 1, **characterized in that** a material of the polymer resin layer comprises at least one of nylon or polyethylene terephthalate.

10. The packaging film according to claim 1, **characterized in that** the packaging film further comprises a matte layer, the protective layer is located between the matte layer and the first bonding layer, and thickness of the matte layer is 2 µm to 5 µm.

11. The packaging film according to claim 1, **characterized in that** thickness of the metal layer is 24 µm to 35 µm, and thickness of the sealing layer is 24 µm to 35 µm.

12. The packaging film according to claim 1, **characterized in that** the sealing layer comprises polypropylene.

13. An electrochemical apparatus, comprising an electrode assembly, **characterized in that** the electrochemical apparatus further comprises the packaging film according to any one of claims 1 to 12, and the packaging film is configured to package the electrode assembly.

14. The electrochemical apparatus according to claim 13, **characterized in that** the electrode assembly comprises a positive electrode plate, a separator, and a negative electrode plate, wherein the separator is located between the positive electrode plate and the negative electrode plate, the positive electrode plate, the separator, and the negative electrode plate are made into the electrode assembly through lamination or winding, and the negative electrode plate comprises a silicon-based material.

15. The electrochemical apparatus according to claim 14, **characterized in that** the silicon-based material comprises at least one of silicon, silicon monoxide, a silicon-carbon composite material, or a composite material of silicon monoxide and carbon.

16. An electronic apparatus, **characterized by** comprising the electrochemical apparatus according to any one of claims 13 to 15.
